# EUROPEAN PATENT APPLICATION

(11) **EP 4 246 669 A2**
(43) Date of publication of application: **20.09.2023**
(21) Application number: 23161648.3
(22) Date of filing: 14.03.2023
(51) Int. Cl.: H01M 10/658, H01M 50/204, H01M 50/264, H01M 50/271, H01M 50/289, H01M 50/507, H01M 50/516, H01M 50/548, H01M 50/557

(54) **BATTERY MODULE**

(30) Priority: 14.03.2022 KR 20220031682
(71) Applicant: SK On Co., Ltd., Seoul 03161 (KR)
(72) Inventor: YOO, Tak Kyung, 34124 Daejeon (KR); RHEE, Seo Roh, 34124 Daejeon (KR); LEE, Seung Hun, 34124 Daejeon (KR); CHOI, Yang Kyu, 34124 Daejeon (KR)
(74) Representative: Prüfer & Partner mbB Patentanwälte · Rechtsanwälte

(57) **Abstract**

A battery module includes a cell stack in which a plurality of battery cell assemblies are stacked; a busbar assembly electrically connected to the cell stack; and a cover assembly covering the busbar assembly, wherein at least one of the plurality of battery cell assemblies includes at least two battery cells opposing each other; and a support member supporting the at least two battery cells, and wherein the busbar assembly is coupled to the support member.

## Description

### BACKGROUND

### 1. FIELD

Example embodiments of the present disclosure relate to a battery module.

### 2. DESCRIPTION OF RELATED ART

A secondary battery may be charged and discharged differently from primary batteries, and has attracted attention as a power source for a power source for various mobile devices and electric vehicles. For example, a type of secondary battery using a non-aqueous electrolyte having high energy density may have good output and may be used for driving of a motor of an electric vehicle by connecting a plurality of the batteries in series.

A battery module applied to an electric vehicle may be modularized by electrically connecting a plurality of battery cells due to the need for high power and large capacity, and an electric vehicle may include a plurality of such battery modules to obtain high power.

To configure a large-capacity and large-area battery module, the number of battery cells included in the battery module may increase. Accordingly, it has been necessary to improve assembly efficiency and reduce the weight of the battery module by simplifying the structure of the battery module.

Also, the electrode assembly of the battery cell may generate heat while being charged and discharged, and due to this heat generation, internal temperature of the battery module may rise, resulting in deterioration in electrical performance or ignition. Furthermore, when a large number of secondary battery cells are included in a battery module, a flame generated by ignition of one battery cell may be transferred to other battery cells around the battery, which may cause a chain of ignition or explosion.

A general battery module may have a complicated heat transfer path from the battery cell to the outside such that heat dissipation and cooling performance may be deteriorated.

### SUMMARY

An example embodiment of the present disclosure is to provide a battery module having a simplified structure and improved assembly efficiency.

An example embodiment of the present disclosure is to provide a battery module which may have an increased heat dissipation efficiency by reducing a heat transfer path of a battery cell.

An example embodiment of the present disclosure is to provide a battery module which may have various sizes depending on design requirements.

An example embodiment of the present disclosure is to provide a battery module which may prevent chain ignition due to spread of heat between battery cells by disposing an insulating member between battery cells.

According to an example embodiment of the present disclosure, a battery module includes a cell stack in which a plurality of battery cell assemblies are stacked; a busbar assembly electrically connected to the cell stack; and a cover assembly covering the busbar assembly, wherein at least one of the plurality of battery cell assemblies includes at least two battery cells opposing each other; and a support member supporting the at least two battery cells, and wherein the busbar assembly is coupled to the support member.

At least one of the plurality of battery cell assemblies may include a first insulating member disposed between the at least two battery cells, and the first heat insulating member is configured to prevent heat propagation between the at least two battery cells.

The plurality of battery cell assemblies may include a first battery cell assembly and a second battery cell assembly adjacent to each other, the support member of the first battery cell assembly may include a coupling protrusion, and the support member of the second battery cell assembly may include a coupling groove in which the coupling protrusion is accommodated.

The battery module may further include a first adhesive member having one surface to which the first battery cell assembly is attached and the other surface opposing the one surface to which the second battery cell assembly is attached.

The busbar assembly may include a busbar electrically connected to at least one of the plurality of battery cell assemblies; and busbar frame supporting the busbar.

One of the busbar frame and the support member may include a first hook, and the other may include a first hooking groove into which the first hook is inserted.

The at least two battery cells may include a first battery cell and a second battery cell opposing each other in a first direction, the first battery cell may include a first lead tab of which at least a portion is bent, and the second battery cell may include a second lead tab in contact with the first lead tab.

The first lead tab may include a first connection portion in contact with the second lead tab, the second lead tab may include a second connection portion in contact with the first connection portion, and the first connection portion and the second connection portion may overlap each other in a direction from the support member toward the busbar assembly.

The first connection portion and the second connection portion may be disposed between the support member and the busbar assembly.

The support member may include a plurality of guide grooves opposing the first connecting portion and the second connecting portion, and the first connection portion and the second connection portion may be welded to each other in a first welding region formed along at least one of the plurality of guide grooves.

The busbar assembly may include a busbar electrically connected to the first battery cell and the second battery cell, and the busbar may be welded to the first connection portion and the second connection portion in a second welding region.

The plurality of guide grooves may include a first guide groove and a second guide groove extending parallel to each other, the first welding region may be formed along the first guide groove, and the second welding region may be formed along the second guide groove.

The cover assembly may include a cover frame coupled to at least one of the busbar assembly and the support member; and a second heat insulating member disposed between the cover frame and the busbar assembly.

One of the busbar assembly and the cover frame may include a second hook, and the other may include a second hooking groove into which the second hook is inserted.

The cover assembly may further include a second adhesive member for fixing the second heat insulating member to the cover frame.

The second heat insulating member may include ceramic wool.

The at least two battery cells may oppose each other in a first direction, and at least one of the at least two battery cells may include a cell body portion in which an electrode assembly is accommodated; and a plurality of lead tabs disposed on both ends of the cell body in a second direction perpendicular to the first direction.

The busbar assembly may oppose the cell stack in the second direction and may be electrically connected to at least one of the plurality of lead tabs.

The busbar assembly may be disposed on both ends of the cell stack in the second direction.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1 is a perspective diagram illustrating a battery module according to an example embodiment of the present disclosure;
FIG. 2 is an exploded perspective diagram illustrating a battery module according to an example embodiment of the present disclosure;
FIG. 3 is an exploded perspective diagram illustrating a battery cell assembly according to an example embodiment of the present disclosure;
FIG. 4 is a perspective diagram of a battery cell included in a battery cell assembly according to an example embodiment of the present disclosure;
FIG. 5 is an exploded perspective diagram illustrating a protective member and a support member included in a battery cell assembly according to an example embodiment of the present disclosure;
FIG. 6 is a perspective diagram illustrating a support member included in a battery cell assembly according to an example embodiment of the present disclosure;
FIG. 7 is a diagram illustrating a state in which a battery cell assembly is seated on a seating surface according to an example embodiment of the present disclosure;
FIG. 8 is a diagram illustrating a state in which battery cell assemblies are stacked along a seating surface according to an example embodiment of the present disclosure;
FIG. 9 is an enlarged perspective diagram illustrating a portion of a battery cell assembly according to an example embodiment of the present disclosure;
FIG. 10 is a cross-sectional diagram illustrating the example in FIG. 9 taken along line I-I';
FIG. 11 is a diagram illustrating a combination of a battery cell assembly according to an example embodiment of the present disclosure, viewed from above;
FIG. 12 is an exploded perspective illustrating a busbar assembly coupled to a cell stack according to an example embodiment of the present disclosure;
FIG. 13 is a diagram illustrating a state in which a busbar assembly is coupled to a battery cell assembly according to an example embodiment of the present disclosure;
FIG. 14 is a cross-sectional diagram illustrating a state in which a busbar assembly is coupled to a cell stack according to an example embodiment of the present disclosure;
FIG. 15 is an exploded perspective a cover assembly according to an example embodiment of the present disclosure;
FIG. 16 is a cross-sectional diagram illustrating a state in which the cover assembly is coupled to the busbar assembly according to the portion taken along line III-III in FIG. 15 according to an example embodiment of the present disclosure; and
FIG. 17 is an example sequence of assembling a battery module.

### DETAILED DESCRIPTION

It is to be understood that the terms or words used in this description and the following claims must not be construed to have meanings which are general or may be found in a dictionary. Therefore, considering the notion that an inventor may most properly define the concepts of the terms or words to best explain his or her invention, the terms or words must be understood as having meanings or concepts that conform to the technical spirit of the present disclosure. Also, since the example embodiments set forth herein and the configurations illustrated in the drawings are nothing but a mere example and are not representative of all technical spirits of the present disclosure, it is to be understood that various equivalents and modifications may replace the example embodiments and configurations at the time of the present application.

In the drawings, same elements will be indicated by same reference numerals. Also, redundant descriptions and detailed descriptions of known functions and elements that may unnecessarily make the gist of the present disclosure obscure will not be provided. In the accompanying drawings, some elements may be exaggerated, omitted or briefly illustrated, and the sizes of the elements do not necessarily reflect the actual sizes of these elements.

An expression used in the singular encompasses the expression of the plural, unless it has a clearly different meaning in the context.

In example embodiments, terms such as an upper side, an upper portion, a lower side, a lower portion, a side surface, a front surface, a rear surface, or the like, are represented based on the directions in the drawings, and may be used differently if the direction of an element is changed.

The terms "first," "second," and the like may be used to distinguish one element from the other, and may not limit a sequence and/or an importance, or others, in relation to the elements. In some cases, a first element may be referred to as a second element, and similarly, a second element may be referred to as a first element without departing from the scope of right in the example embodiments.

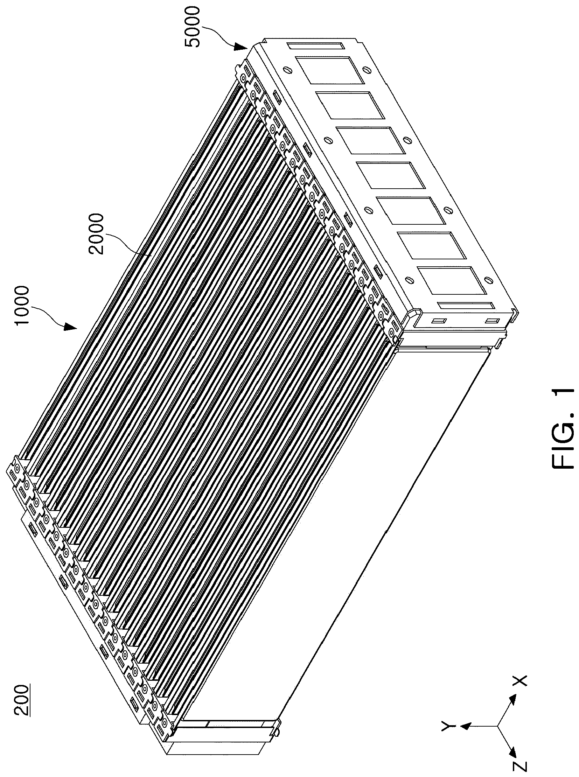

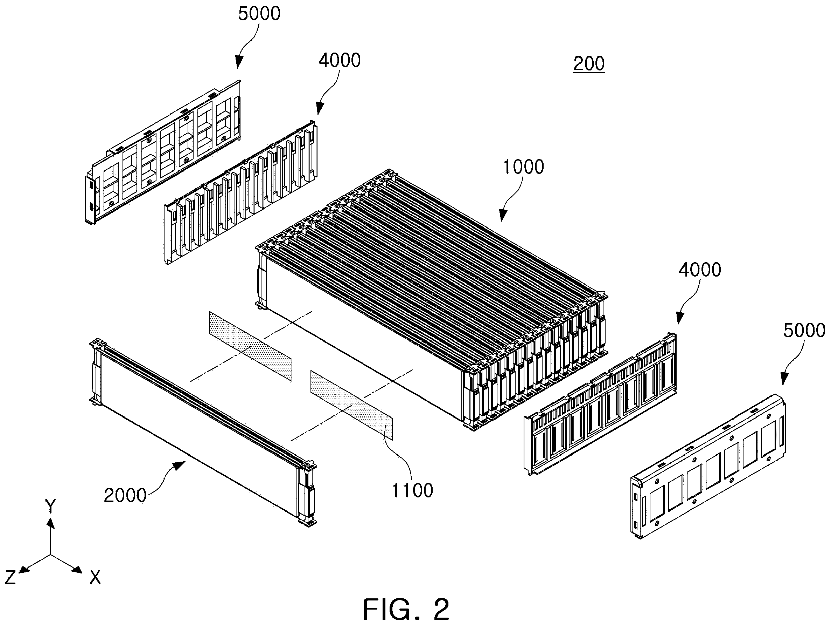

FIG. 1 is a perspective diagram illustrating a battery module 200 according to an example embodiment. FIG. 2 is a perspective diagram illustrating a battery module 200 according to an example embodiment.

The battery module 200 may include one or more battery cell assemblies 2000 for outputting or storing electrical energy, a busbar assembly 4000 electrically connected to the battery cell assembly 2000, and a cover assembly 5000 covering the busbar assembly 4000.

The battery module 200 may include a plurality of battery cell assemblies 2000. For example, as illustrated in FIGS. 1 or 2, the battery module 200 may include a plurality of battery cell assemblies 2000 coupled and stacked in one direction (e.g., Z-axis direction). The battery cell assembly 2000 may include one or more battery cells 2100 and may charge or discharge electrical energy.

A plurality of battery cell assemblies 2000 may be stacked in one direction (e.g., the Z-axis direction in FIG. 1) and may form the cell stack 1000. To fasten the plurality of battery cell assemblies 2000 to each other, an adhesive member 1100 may be disposed between the battery cell assemblies 2000. One battery module 200 may include at least one cell stack 1000, and the number of battery cell assemblies 2000 included in each cell stack 1000 may be varied.

One battery cell assembly 2000 may be considered as a manufacturing unit of the battery module 200. For example, the number of battery cell assemblies 2000 may be determined depending on a power value required for the battery module 200 and may assemble the elements together, thereby manufacturing the battery module 200. For example, the battery module 200 illustrated in FIG. 1 may be formed by combining 16 battery cell assemblies 2000.

In example embodiments, the busbar assembly 4000 may be disposed on at least one side of the cell stack 1000 and may electrically connect the battery cell assemblies 2000 to each other. A pair of the busbar assemblies 4000 may be provided and may be disposed on both ends of the cell stack 1000, respectively. However, the pair of busbar assemblies 4000 may be integrally formed by being connected to each other.

In example embodiments, the cover assembly 5000 may be coupled to the busbar assembly 4000 or the cell stack 1000 and may cover the busbar assembly 4000. The cover assembly 5000 may prevent the busbar assembly 4000 from being short-circuited with other members and may protect the busbar assembly 4000 from external impacts. Also, the cover assembly 5000 may prevent high-temperature heat energy or flames generated by the battery cell assembly 2000 from spreading to other adjacent components (e.g., other adjacent battery modules).

In example embodiments, a plurality of the battery cell assemblies 2000 may be stacked and may form the body of the battery module 200. For example, as illustrated in FIG. 1 or 2, the cell stack 1000 may form the body of the battery module 200 without a separate case or housing. The size of the battery module 200 may be freely adjusted by varying the number of battery cell assemblies 2000. Also, as the case or the housing is not provided, the battery cell assembly 2000 may be directly exposed to the outside, and heat dissipation efficiency of the battery module 200 may increase.

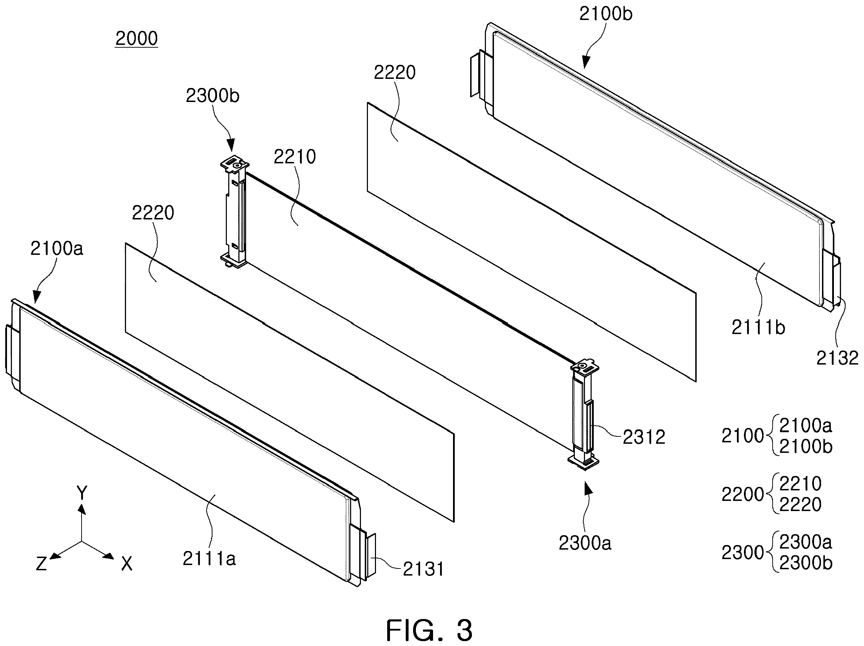

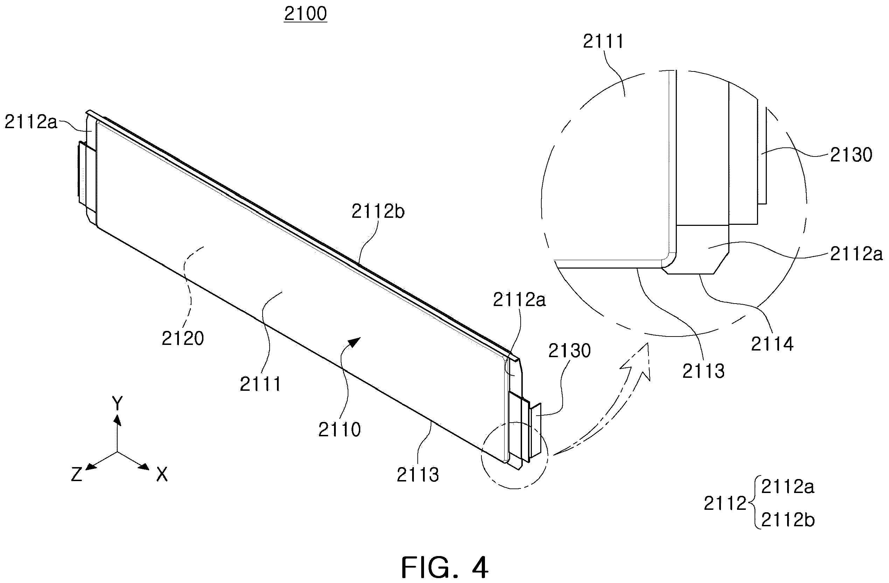

The battery cell assembly 2000 may be configured to facilitate stack assembly. Hereinafter, a battery cell assembly 2000 according to example embodiments will be described in greater detail with reference to FIGS. 3 and 4.

FIG. 3 is an exploded perspective diagram illustrating a battery cell assembly 2000 according to an example embodiment. FIG. 4 is a perspective diagram of a battery cell 2100 according to an example embodiment.

The battery cell assembly 2000 may include one or more battery cells 2100, a protective member 2200, and a support member 2300. For example, the battery cell assembly 2000 may include a plurality of battery cells 2100 opposing each other, a protective member 2200 disposed between the plurality of battery cells 2100, and a support member 2300 coupled to the protective member 2200.

The battery cell assembly 2000 may include a pair of battery cells 2100 for outputting or storing electrical energy. For example, as illustrated in FIG. 3, the battery cell assembly 2000 may include a first battery cell 2100a and a second battery cell 2100b opposing each other. The pair of battery cells 2100 may be electrically connected to each other through lead tabs 2131 and 2132. The lead tabs 2131 and 2132 may be connected to each other by welding. In this case, the pair of battery cells 2100 may be connected in series or parallel.

In example embodiments, the battery cell 2100 may be a pouch type battery cell. Referring to FIG. 4, the battery cell 2100 may include a cell body portion 2111 configured in a form in which the electrode assembly 2120 is accommodated in the pouch 2110, and a plurality of lead tabs 2130 electrically connected to the electrode assembly 2120 and exposed to the outside of the pouch 2110.

The electrode assembly 2120 may include a plurality of internal electrode plates. Here, the internal electrode plate may include a positive electrode plate and a negative electrode plate, and the electrode assembly 2120 may be configured in a form in which the positive electrode plate and the negative electrode plate are stacked with a separator interposed therebetween. Each of the plurality of positive electrode plates and the plurality of negative electrode plates may include uncoated portions to which an active material is not coated, and the uncoated portions may be connected to each other such that the same polarities may be in contact with each other. The uncoated portions having the same polarity may be electrically connected to each other and may be electrically connected to other external components of the battery cell 2100 through the lead tab 2130. In the case of the battery cell 2100 illustrated in FIG. 4, the two lead tabs 2130 may be drawn out from both sides of the cell body 2111, or alternatively, the two lead tabs 2130 may be drawn in the same direction from either side of the cell body 2111 and may be disposed with different lengths or heights.

The pouch 2110 may surround the electrode assembly 2120, may form the exterior of the cell body 2111, and may provide an internal space in which the electrode assembly 2120 and an electrolyte solution (not illustrated) are accommodated. The pouch 2110 may be formed by folding a sheet of exterior material. For example, the pouch 2110 may be configured in a form in which a sheet of exterior material is folded in half and the electrode assembly 2120 may be accommodated therebetween. The exterior material may be formed of a material for protecting the electrode assembly 2120 from the external environment, and may include, for example, an aluminum film.

An exterior material may be bonded to an edge of the pouch 2110 and a sealing portion 2112 may be formed. A thermal fusion method may be used to bond the exterior materials for forming the sealing portion 2112, but an example embodiment thereof is not limited thereto.

The sealing portion 2112 may include a first sealing portion 2112a formed in a position in which the lead tab 2130 is disposed, and a second sealing portion 2112b formed in a position in which the lead tab 2130 is not disposed. To increase reliability of bonding of the sealing portion 2112 and to reduce an area of the sealing portion 2112, at least a portion of the sealing portion 2112 may be folded one or more times.

The sealing portion 2112 may not be formed on a surface on which the pouch 2110 is folded along one edge of the electrode assembly 2120. A portion in which the pouch 2110 is folded along one edge of the electrode assembly 2120 may be defined as a folding portion 2113 to be distinguished from the sealing portion 2112. That is, the pouch 2110 type battery cell 2100 may have a three-sided sealing pouch in which the sealing portion 2112 may be formed on three surfaces out of four edge surfaces of the pouch 2110, and the folding portion 2113 is formed on the other side.

When a sheet of exterior material is folded to surround the electrode assembly 2120 and seal the three sides as described above, the sealing portion 2112 adjacent to the folding portion 2113 may have a protrusion further protruding in the lower direction (e.g., the Y-axis negative direction in FIG. 4) than the folding portion 2113 by the thickness of the cell body portion 2111. For example, as illustrated in the enlarged diagram in FIG. 4, a protruding portion 2114 protruding downwardly from the folding portion 2113 may be formed in a portion extending from the first sealing portion 2112a to the folding portion 2113. This protrusion 2114 may be referred to as a shark-fin, delta-fin, or bat-ear.

The battery cell 2100 in the example embodiments is not limited to the three-sided sealing pouch type described above. For example, a pouch may be formed by overlapping two sheets of different exterior materials, and sealing portions may be formed on four surfaces around the pouch. For example, the sealing portion may include a sealing portion having two surfaces on which the lead tab is disposed, and a sealing portion having the other two surfaces on which the lead tab is not disposed.

Also, the battery cell 2100 included in the battery cell assembly 2000 in the example embodiments is not limited to the aforementioned pouch-type battery cell, and may be configured as a cylindrical battery cell or a prismatic battery cell.

Referring to FIG. 3, the protective member 2200 may be disposed between the pair of battery cells 2100. The protective member 2200 may include detailed components performing various roles. For example, the protective member 2200 may be disposed between the first battery cell 2100a and the second battery cell 2100b, and may include a heat insulating member 2210 hindering or blocking heat transfer between the battery cells 2100a and 2100b, and a compression member 2220 applying surface pressure to the battery cell 2100.

The heat insulating member 2210 may prevent or block spread of flame or high-temperature thermal energy between battery cells 2100 neighboring to each other, thereby preventing chain ignition of the battery module 200. To this end, the heat insulating member 2210 may include a material having at least one of flame retardancy, heat resistance, heat insulation, and insulation. For example, heat resistance may refer to properties in which the component does not melt and the shape thereof does not change even at a temperature of 600 degrees Celsius or more, and heat insulation may refer to a properties in which thermal conductivity is 1.0 W/mK or less. For example, the heat insulating member 2210 may include at least a portion of mica, silicate, graphite, alumina, ceramic wool, and Aerogel for preventing spread of heat and/or flame. However, the material of the heat insulating member 2210 is not limited thereto, and any material which may maintain a shape thereof and may prevent heat or flame from spreading to other adjacent battery cells 2100 while a thermal runaway occurs in the battery cell 2100.

In example embodiments, the heat insulating member 2210 may be provided as a plate-like sheet or plate-like pad having a shape corresponding to the cell body portion 2111. However, the shape of the heat insulating member 2210 is not limited thereto, and may be formed in any shape as long as spread of heat between neighboring battery cells 2100 may be blocked with the heat insulating member 2210 interposed therebetween.

The compression member 2220 may be disposed such that one side may oppose the heat insulating member 2210 and the other side opposite to the one side may oppose the battery cell 2100. The compression member 2220 may protect the battery cell 2100 from external impact or may absorb expansion pressure caused by expansion of the battery cell 2100. Accordingly, thickness expansion due to swelling of the battery cell 2100 may be prevented such that changes in exterior of the battery cell assembly 2000 may be reduced and performance degradation of the battery cell 2100 due to swelling may be prevented. To this end, the compression member 2220 may include a material for absorbing the expansion pressure of the battery cell 2100, and may include, for example, a polyurethane-based material.

A plurality of compression members 2220 may be disposed. For example, as illustrated in FIG. 3, the compression members 2220 may be disposed on both sides of the heat insulating member 2210, respectively. The compression member 2220 may be attached to the insulating member 2210. To this end, an adhesive member (not illustrated) may be further disposed between the compression member 2220 and the heat insulating member 2210. However, the adhesive member may not be provided, and the compression member 2220 may remain attached to the heat insulating member 2210 due to a predetermined adhesive force of the material.

The battery cell 2100 may be disposed in contact with the compression member 2220, and may be adhered to the compression member 2220 by a predetermined adhesive force of the compression member 2220. Alternatively, the battery cell 2100 may be adhered to the compression member 2220 by an adhesive member (not illustrated) disposed between the battery cell 2100 and the compression member 2220. For example, as illustrated in FIG. 3, a pair of compression members 2220 may be disposed with an insulating member 2210 therebetween, and the first battery cell 2100a and the second battery cell 2100b may be bonded to and in contact with a pair of compression members 2220, respectively.

In example embodiments, the protective member 2200 may be disposed to cover the cell body 2111 of the battery cell 2100. For example, the protective member 2200 may cover the entire surface of the cell body 2111a of the first battery cell 2100a opposing the second battery cell 2100b, such that the cell body portion 2111a of the first battery cell 2100a may not directly oppose the cell body portion 2111b of the second battery cell 2100b. Accordingly, transfer of high-temperature thermal energy or impact energy generated by the first battery cell 2100a to the second battery cell 2100b may be effectively blocked.

In example embodiments, the battery cell assembly 2000 may include a support member 2300. The support member 2300 may work as a structure supporting the battery cell assembly 2000 by being combined with the protective member 2200. That is, the support member 2300 may be combined with the protective member 2200 and may support the protective member 2200 and may simultaneously support the plurality of battery cells 2100 included in the battery cell assembly 2000. To this end, the support member 2300 may include a material (e.g., a resin material) having a predetermined level of rigidity.

A pair of the support member 2300 may be provided and may be spaced apart from each other in a direction perpendicular to the direction in which the battery cells 2100 opposes. A pair of support members 2300 spaced apart from each other may be fixed to both end portions of the protective member 2200, respectively.

In example embodiments, the support member 2300 may include a guide groove 2312 for welding the lead tab 2130 of the battery cell 2100. The guide groove 2312 may extend in a height direction (e.g., a Y-axis direction) from at least one surface of the support member 2300, and a plurality of guide grooves 2312 may be arranged side by side with each other. At least a portion of the plurality of guide grooves 2312 may be used to weld the lead tabs 2130 of the battery cells 2100 to each other.

The guide groove 2312 may have a shape of a recessed groove formed in at least one surface of the support member 2300, and may guide the position in which the lead tabs 2131 and 2132 of the plurality of battery cells 2100a and 2100b are welded to each other. For example, the lead tab 2131 of the first battery cell 2100a and the lead tab 2132 of the second battery cell 2100b may be disposed to oppose the guide groove 2312 of the support member 2300 while overlapping each other. The lead tab 2131 of the first battery cell 2100a and the lead tab 2132 of the second battery cell 2100b may be welded to each other along the guide groove 2312. To this end, at least a portion of the lead tab 2131 of the first battery cell 2100a and the lead tab 2132 of the second battery cell 2100b may be bent to oppose the guide groove 2312. For example, as illustrated in FIG. 3, at least a portion of the lead tab 2131 of the first battery cell 2100a may be bent in a direction toward the second battery cell 2100b, and at least a portion of the lead tab 2132 of the second battery cell 2100b may be bent in a direction toward the first battery cell 2100a.

The length of the guide groove 2312 in the Y-axis direction may be wider than the width of the lead tab 2130 of the battery cell 2100 in the Y-axis direction.

The guide groove 2312 may be disposed on a surface opposite to a surface opposing one support member 2300a to another support member 2300b. That is, as illustrated in FIG. 3, the guide groove 2312 may be disposed on a surface of the first support member 2300a opposite to a surface opposing the second support member 2300b. Accordingly, the guide groove 2312 may be disposed on a surface of the support member 2300 facing the outside of the battery cell assembly 2000.

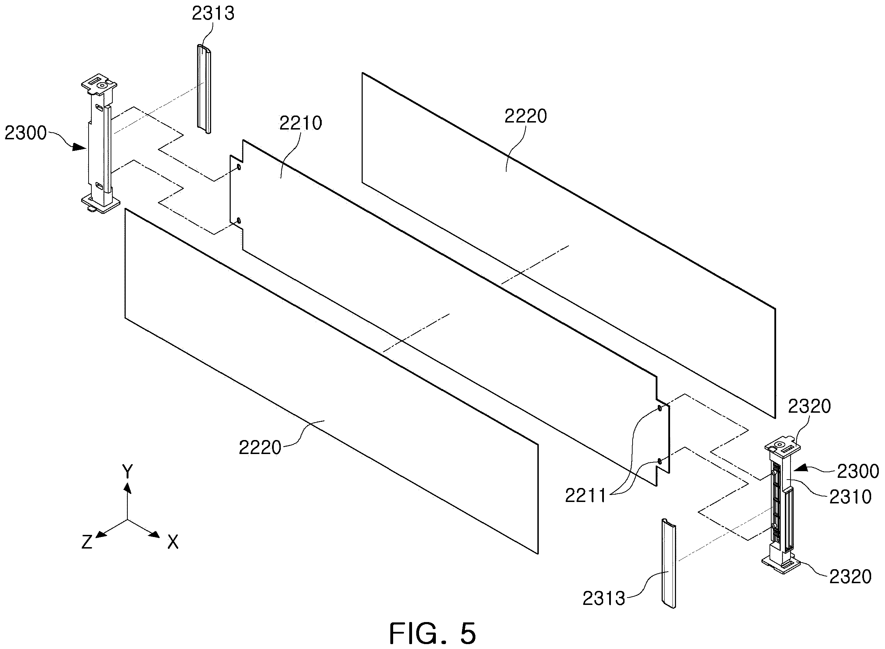

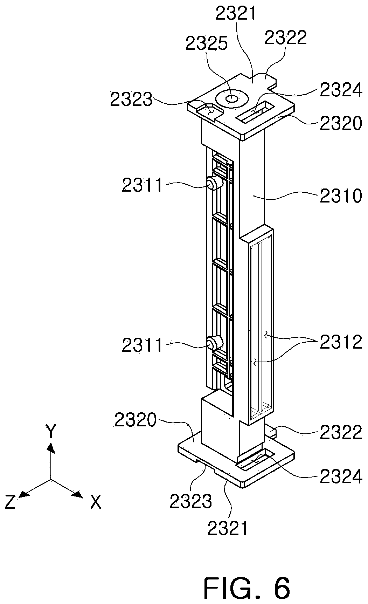

The support member 2300 will be described in greater detail with reference to FIGS. 5 and 6. FIG. 5 is an exploded perspective diagram illustrating a protective member 2200 and a support member 2300 included in a battery cell assembly according to an example embodiment. FIG. 6 is a perspective diagram illustrating a support member 2300 included in a battery cell assembly according to an example embodiment. The battery cell assembly 2000 and the components thereof described with reference to FIGS. 5 and 6 may correspond to the battery cell assembly 2000 and the components thereof described with reference to FIGS. 1 to 4 in the aforementioned example embodiment, and overlapping descriptions will not be provided.

The support member 2300 may be fastened with the protective member 2200. When a direction perpendicular to the wide surface of the protective member 2200 is defined as a first direction, a direction parallel to the long side of the protective member 2200 as a second direction, and a direction parallel to the short side of the protective member 2200 as a third direction, a pair of support members 2300 may be provided and disposed to oppose each other in the second direction with the protective member 2200 interposed therebetween (In the description below, the first direction, the second direction, and the third direction may be defined as above).

The support member 2300 may include a body portion 2310 coupled to the protective member 2200 and a flange portion 2320 disposed on at least one end of the body portion 2310.

Referring to FIG. 5, the support member 2300 may be fastened and coupled to one end of the heat insulating member 2210. In this case, the heat insulating member 2210 may be fastened to the body portion 2310 of the support member 2300. For example, the fastening groove 2211 may be disposed on the end of the heat insulating member 2210, and the fastening protrusion 2311 disposed on the body portion 2310 of the support member 2300 may be inserted into the fastening groove 2211 of the heat insulating member 2210 and may be fastened to each other. To prevent the insulating member 2210 from being separated from the support member 2300, the battery cell assembly 2000 may further include a separation prevention member 2313 covering a coupling portion between the insulating member 2210 and the support member 2300. For example, as illustrated in FIG. 5, the body portion 2310 of the support member 2300 and the separation prevention member 2313 may be coupled to each other, and at least a portion of the heat insulating member 2210 may be fastened therebetween. According to the fastening structure, the heat insulating member 2210 may be firmly fixed by being interposed between the body portion 2310 and the separation prevention member 2313. The body portion 2310 of the support member 2300 and the separation prevention member 2313 may be hook-coupled or coupled to each other using an adhesive, but the coupling method is not limited thereto. Similarly to the support member 2300, the separation prevention member 2313 may include a material (e.g., metal or resin material) having rigidity.

In example embodiments, the support member 2300 may include a flange portion 2320 disposed on upper and lower ends of the body portion 2310. Referring to FIGS. 5 and 6, the flange portion 2320 may be formed wider than the width of the body portion 2310 on upper and lower ends of the body portion 2310. Here, the upper and lower ends of the body portion 2310 may refer to both ends in the third direction parallel to the short side of the protective member 2200.

The flange portion 2320 may be disposed on both ends of the body portion 2310 in the third direction (e.g., an end in a negative Y-axis direction and an end in a positive Y-axis direction), and may include a support surface 2321 perpendicular to the third direction. The support surface 2321 may be a wide and flat surface formed on at least a portion of the flange portion 2320. When the flange portion 2320 is disposed on both ends of the body portion 2310, the support surface 2321 of the flange portion 2320 may form both end surfaces of the support member 2300. For example, as illustrated in FIG. 5, the flange portions 2320 may be disposed on both ends of the support member 2300 in the third direction, respectively. In this case, the support surface 2321 of each flange portion 2320 may form the outermost surface of the support member 2300 in the third direction. In example embodiments, the support surface 2321 of the flange portion 2320 may be substantially parallel to a direction perpendicular to the wide surface of the protective member 2200 (the first direction) . In this case, the first direction may be a direction in which the first battery cell 2100a and the second battery cell 2100b oppose each other. The battery cell assembly 2000 may be seated on a seating surface (or reference surface) outside the battery cell assembly 2000 through the support surface 2321. For example, the seating surface may be a lower surface of a pack housing in which the battery cell assembly 2000 is accommodated or a work table for manufacturing the cell stack 1000.

A coupling protrusion 2322 and a coupling groove 2323 may be disposed on the flange portion 2320. For example, the coupling protrusion 2322 may protrude in a first direction (Z-axis direction) and may be inserted into a coupling groove 2323 of another neighboring support member 2300. To this end, one flange portion 2320 may have the coupling protrusion 2322 and the coupling groove 2323 at opposite corners, respectively.

A fastening portion 2325 used to fasten the battery cell assembly 2000 to an external component (e.g., a cover of the battery module 200) may be disposed on the flange portion 2320. The fastening portion 2325 may be fastened with a fastening member (e.g., a bolt) . For example, the fastening portion 2325 may have a screw groove for screwing with a bolt. Alternatively, the fastening portion 2325 may be formed of a material different from that of the other portions of the support member 2300.

The flange portion 2320 may include an engaging groove 2324 for coupling with a busbar assembly (e.g., 4000 in FIG. 2). For example, the hooking groove 2324 may be configured as a groove through which at least a portion of the flange portion 2320 penetrates, and at least a portion of the busbar assembly (4000 in FIG. 2) may be inserted into the groove, and the busbar assembly (4000 in FIG. 2) and the battery cell assembly 2000 may be coupled to each other.

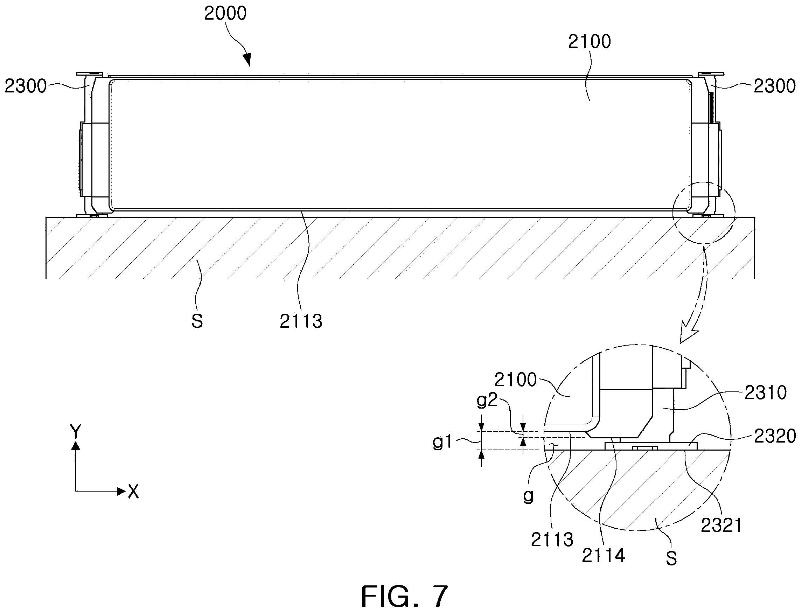

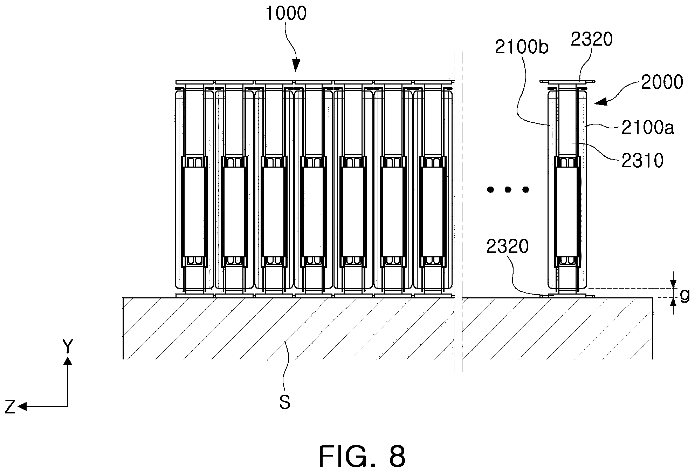

FIG. 7 is a diagram illustrating a state in which a battery cell assembly 2000 is seated on a seating surface S according to an example embodiment. FIG. 8 is a diagram illustrating a state in which battery cell assemblies are stacked along a seating surface according to an example embodiment. Referring to FIGS. 7 and 8, the battery cell assembly 2000 may be stably supported through a support surface 2321 such that the folding portion 2113 of each battery cell 2100 may oppose the seating surface S.

When a stack is formed with only the battery cells 2100 without the support member 2300, it may be difficult to accurately align the individual battery cells 2100 with respect to the seating surface S. The seating surface S described herein may be a workbench for manufacturing the cell stack 1000 or a pack housing in which the battery cell assembly 2000 is accommodated.

In particular, in the pouch 2110 type battery cell 2100, the shark pin 2114 protruding from the folding portion 2113 of the battery cell 2100 or flatness of the folding portion 2113, it may be difficult to allow the battery cell 2100 to stand such that the folding portion 2113 may oppose the seating surface S. However, the battery cell assembly 2000 may allow the battery cell 2100 to be stably stood on the seating surface S through the flat support surface 2321 of the support member 2300. For example, as illustrated in FIG. 7, the support surface 2321 of the pair of support members 2300 may be further disposed below the battery cell 2100 in a negative Y-axis direction. Due to this structure, the battery cell assembly 2000 may stably stand on the seating surface S without being disturbed by the shark pin 2114.

In example embodiments, a predetermined spacing g may be formed between the support surface 2321 of the flange portion 2320 and the battery cell 2100. For example, the first battery cell 2100a and the second battery cell 2100b may be spaced apart from each other in a third direction (Y-axis direction) with respect to an imaginary line connecting each support surface 2321 of the pair of support members 2300 to each other. Accordingly, the spacing g may be formed between the battery cell 2100 and the external seating surface S which may be in contact with the pair of support surfaces 2321. A gap g1 of the spacing g may be greater than a distance g2 from the folding portion 2113 of the battery cell 2100 to an end of the shark pin 2114.

The battery cell assembly 2000 according to example embodiments may be stably supported by the seating surface S (for example, a work stand for manufacturing the cell stack 1000) through the support surface 2321 of the support member 2300 to which the battery cell 2100 is fixed and accordingly, the plurality of battery cells 2100 may be accurately stacked and arranged in a direction parallel to the seating surface S.

In example embodiments, the folding portion 2113 of the battery cell 2100 included in the battery cell assembly 2000 may be directly exposed opposing the seating surface S. The battery module 200 may not have a separate housing or case, and accordingly, a rigid member preventing heat transfer between the battery cell 2100 and the seating surface S may not be provided, such that the battery cell 2100 may be disposed to directly oppose the seating surface S outside the battery module 200. Accordingly, heat dissipation efficiency may be increased in a direction from the battery cell 2100 toward the external seating surface S. Although not illustrated in the drawing, a heat dissipation member (not illustrated) may be disposed between the battery cell 2100 and the seating surface S (e.g., a lower surface of the pack housing) to further increase heat dissipation efficiency. For example, the heat dissipation member (not illustrated) may include a thermal adhesive filling the gap such that a heat transfer path by conduction may be formed between the lower surface (e.g., the folding portion 2113) of the battery cell 2100 and the seating surface S. When a heat dissipation member (not illustrated) is disposed, since heat conduction may occur more actively in a direction from the battery cell 2100 toward the seating surface S, it may be advantageous to maintain a safe temperature of the battery cell 2100.

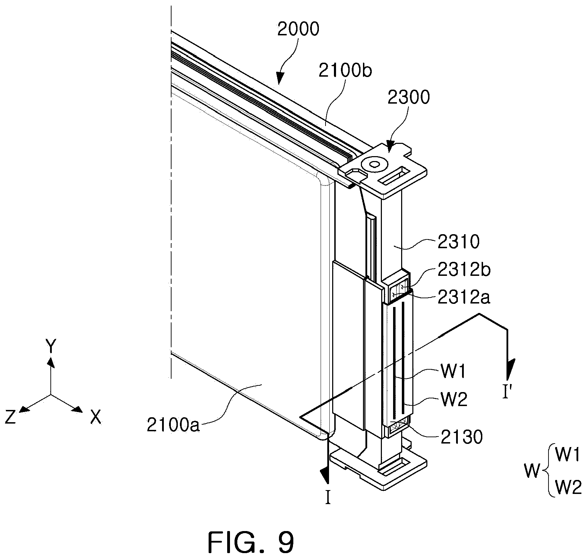

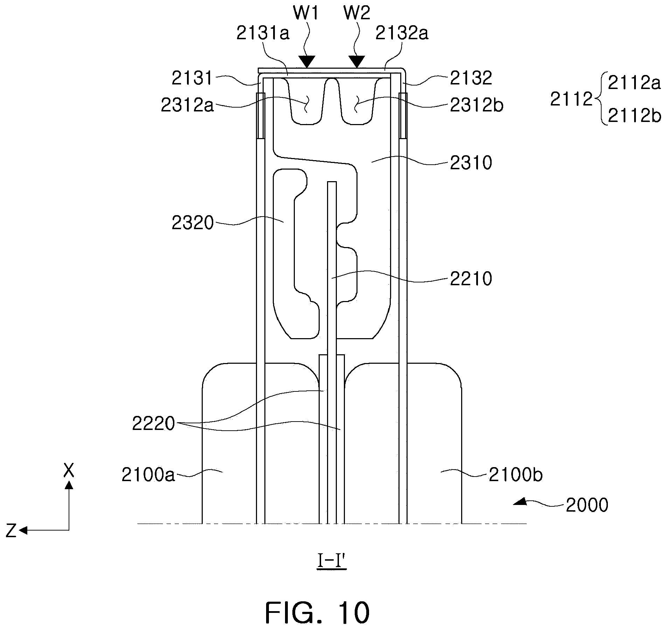

In the description below, electrical connection between the battery cells 2100 included in the battery cell assembly 2000 according to example embodiments will be described with reference to FIGS. 9 and 10. FIG. 9 is an enlarged perspective diagram illustrating a portion of a battery cell assembly 2000 according to an example embodiment, and FIG. 10 is a cross-sectional diagram illustrating the example in FIG. 9 taken along line I-I'. Since the battery cell assembly 2000 described with reference to FIGS. 9 and 10 corresponds to the battery cell assembly 2000 described with reference to FIGS. 1 to 7, overlapping descriptions will not be provided.

In example embodiments, the battery cell assembly 2000 may include a first battery cell 2100a and a second battery cell 2100b opposing each other in a first direction (e.g., a Z-axis direction) . The first battery cell 2100a and the second battery cell 2100b may be electrically connected to each other through lead tabs 2131 and 2132.

The lead tab of the first battery cell 2100a (hereinafter, first lead tab 2131) and the lead tab of the second battery cell 2100b (hereinafter, second lead tab 2132) may be lead out from the cell bodies 2111a and 2111b of the cells 2100a and 2100b in a second direction (e.g., an X-axis direction) perpendicular to the first direction (Z-axis direction). At least one of the first lead tab 2131 and the second lead tab 2132 may be at least partially bent. For example, as illustrated in FIG. 10, at least a portion of the first lead tabs 2131 may be bent in a direction toward the second battery cell 2100b, and at least a portion of the second lead tabs 2132 may be bent in a direction toward the first battery cell 2100a. As the first lead tab 2131 and the second lead tab 2132 are bent vertically, at least portions of the two lead tabs 2130 may overlap each other in the second direction (X-axis direction) and may be in contact with each other.

The overlapping portions of the two lead tabs 2131 and 2132 may be coupled to each other by welding. In this case, the welding may be performed by a laser welding method in which a base material (an object to be welded) is bonded to each other by irradiation with a laser. However, a coupling method between the two lead tabs 2131 and 2132 is not limited to welding, and any coupling method for supplying current to the two lead tabs 2131 and 2132 may be used.

In example embodiments, the first lead tab 2131 and the second lead tab 2132 may be bent in a direction opposing each other, such that at least a portion of the first lead tab 2131 and the second lead tab 2132 may in contact with each other. In the description below, a portion of the first lead tab 2131 opposing and in contact with the second lead tab 2132 may be referred to as a first connection portion 2131a, and a portion of the second lead tab 2132 opposing and in contact with the first lead tab 2131 may be referred to as a second connection portion 2132a. Referring to FIG. 10, the first connection portion 2131a and the second connection portion 2132a may be disposed to oppose each other in the second direction (X-axis direction) with the body portion 2310 of the support member 2300. At least a portion of the first lead tab 2131 and at least a portion of the second lead tab 2132 included in the connecting portions 2131a and 2132a may have a width the same as a width of one surface of the support member 2300 (e.g., a length in the Z-axis direction).

The connection portions 2131a and 2132a of the two lead tabs 2131 and 2132 may be welded along the welding regions W1 and W2. At least one of the welding regions W1 and W2 may be determined. For example, the welding regions W1 and W2 may be determined as continuously extending welding lines. For example, the connecting portions 2131a and 2132a may be welded along two welding lines extending parallel to each other.

Each of the welding regions W1 and W2 may extend from the surfaces of the connection portions 2131a and 2132a of the two lead tabs 2131 and 2132 in a third direction (Y-axis direction) perpendicular to both the first direction (Z-axis direction) and the second direction (X-axis direction).

When a plurality of welding regions W1 and W2 are determined, one welding region (e.g., W1) may be determined to weld the two lead tabs 2131 and 2132 to each other, and the other welding region (e.g., W2) may be determined to weld the two lead tabs 2131 and 2132 and another member (e.g., the busbar of the battery module 200) to each other.

One or more guide grooves 2312 may be formed in the body portion 2310 of the support member 2300 such that the two lead tabs 2131 and 2132 may be stably welded. For example, one or more guide grooves 2312 may be formed on a surface of the body portion 2310 of the support member 2300 opposing the connection portions 2131a and 2132a.

For example, in the guide groove 2312, a recess recessed in the second direction in the body portion 2310 may extend in a third direction (Y-axis direction) perpendicular to the second direction (X-axis direction) . The welding regions W1 and W2 for welding the connecting portions 2131a and 2132a of the two lead tabs 2131 and 2132 may be formed along the guide groove 2312. When a plurality of guide grooves 2312 are formed, different welding regions W1 and W2 may be formed along each guide groove 2312.

In example embodiments, the guide groove 2312 may include a first guide groove 2312a and a second guide groove 2312b formed parallel to each other. A welding process may be individually performed along each of the guide grooves 2312a and 2312b. In this case, the welding process may be performed in sequence. For example, in the first welding process, the first lead tab 2131 of the first battery cell 2100a and the second lead tabs 2132 of the second battery cell 2100b may be welded to each other in the first welding region W1 formed along the first guide groove 2312a. In the second welding process, in the second welding region W2 formed along the second guide groove 2312b, the first lead tab 2131, the second lead tab 2132 and other members (for example, the battery module (200) may be welded together. In the process of manufacturing of the battery cell assembly 2000, only the first welding process may be performed. Thereafter, a second welding process may be performed in the process of coupling the battery cell assembly 2000 and the busbar assembly (e.g., 4000 in FIG. 2) to each other.

The guide groove 2312 may function as a safety space in a welding process. That is, the guide groove 2312 may prevent the battery cell assembly 2000 from being damaged by welding particles or irregular impacts generated by the rear surfaces of the connection portions 2131a and 2132a or shape deformation of the connection portion during welding.

In example embodiments, the first connection portion 2131a, the second connection portion 2132a, and the guide groove 2312 may overlap in a second direction (X-axis direction) . For example, as illustrated in FIG. 10, the guide groove 2312, the first connection portion 2131a, and the second connection portion 2132a may be disposed in sequence in one direction (e.g., the positive X-axis direction) . In this case, one direction (the positive X-axis direction) may be a direction opposite to a direction in which the pair of support members 2300 oppose each other.

FIGS. 9 and 10 illustrate a guide groove 2312 formed in either support member 2300 of the battery cell assembly 2000 and two lead tabs 2130 welded to oppose the guide groove 2312, and similarly, the guide groove and the two lead tabs welded opposite the groove may be disposed on the support member on the opposite side. That is, the two lead tabs 2131 drawn to both sides from the first battery cell 2100a of the battery cell assembly 2000 and the two lead tabs 2132 drawn to both sides from the second battery cell 2100b may be welded to each other along the guide grooves 2312 of the pair of support members 2300, such that the two battery cells 2100 may be electrically connected to each other.

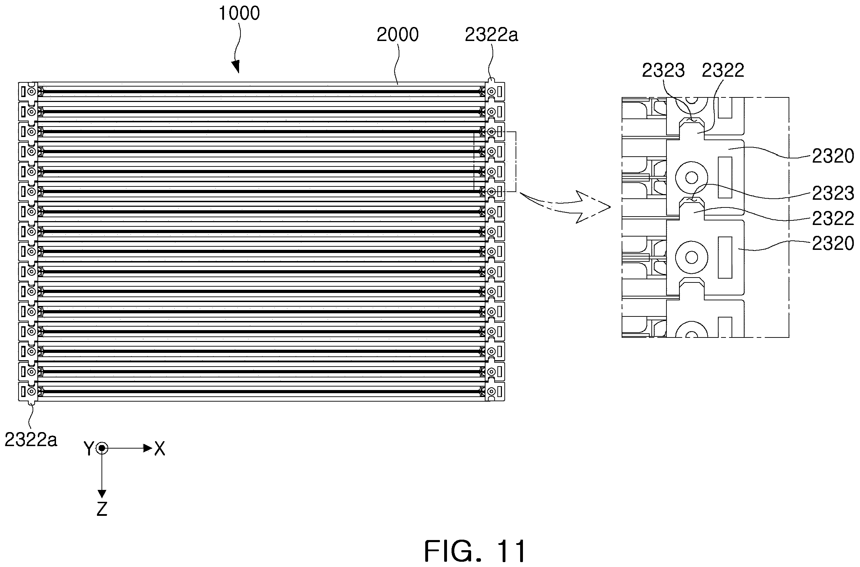

The plurality of battery cell assemblies 2000 including a pair of electrically connected battery cells 2100 may be stacked in one direction and may form at least a portion of the battery module 200. Hereinafter, coupling between the plurality of battery cell assemblies 2000 will be described with reference to FIG. 11.

FIG. 11 is a diagram illustrating a combination of battery cell assembly 2000 according to an example embodiment. Since the battery cell assembly 2000 described with reference to FIG. 11 corresponds to the battery cell assembly 2000 described above in FIGS. 1 to 10, overlapping descriptions will not be provided.

In example embodiments, a plurality of battery cell assemblies 2000 may be stacked in one direction (e.g., Z-axis direction) and may form the cell stack 1000. An adhesive member (e.g., 1100 in FIG. 2) having adhesive strength may be disposed between the battery cell assemblies 2000, and accordingly, the battery cell assemblies 2000 may be fastened in a stacked state.

The support member 2300 of the battery cell assembly 2000 may include a coupling guide member guiding coupling (stacking) of the battery cell assembly 2000. For example, the coupling guide member may include a coupling protrusion 2322 disposed on the support member 2300 of one of two battery cell assemblies 2000 opposing each other and a coupling groove 2323 disposed on the support member 2300 of the other battery cell assembly 2000.

The coupling groove 2323 may have a shape of recess corresponding to the thickness (e.g., length in the Y-axis direction) or width (e.g., length in the X-axis direction) of the coupling protrusion 2322 such that the coupling protrusion 2322 may be inserted.

Referring to FIG. 11, a coupling protrusion 2322 of one battery cell assembly 2000 may be inserted into a coupling groove 2323 of another battery cell assembly 2000 adjacent thereto, and accordingly, the battery cell assemblies 2000 may be guided to be coupled to each other in the correct positions.

In example embodiments, the coupling protrusion 2322 and the coupling groove 2323 may be disposed on the flange portion 2320 of the support member 2300. For example, the coupling protrusion 2322 may be configured to protrude from the flange portion 2320 in a first direction (Z-axis direction), and the coupling groove 2323 may be recessed one the side opposite to the portion of the flange portion 2320 in which coupling protrusion 2322 protrudes. Accordingly, the coupling protrusion 2322 of the flange portion 2320 of one battery cell assembly 2000 may be inserted into the coupling groove 2323 of the flange portion 2320 of the neighboring battery cell assembly 2000.

As the battery cell assemblies 2000 are stacked in order in the first direction (Z-axis direction), the coupling protrusion 2322 of one battery cell assembly 2000 may be inserted into the coupling groove 2323 of the battery cell assembly 2000 disposed subsequently. In this case, to straighten the side surface of the battery module 200, the coupling protrusion 2322a of the battery cell assembly 2000 disposed in the outermost portion in the first direction may be cut out.

In example embodiments, a pair of support members 2300 included in one battery cell assembly 2000 may each have a coupling guide member. For example, as illustrated in FIG. 11, a pair of support members 2300 included in one battery cell assembly 2000 may include coupling protrusions 2322 protruding in opposite directions, and coupling groove 2323 recessed in opposite directions. For example, when each of the battery cell assemblies 2000 includes a first support member and a second support member, a coupling protrusion 2322 disposed on the first support member of one battery cell assembly (first battery cell assembly) may be accommodated in a coupling groove 2323 of a first support member of another neighboring battery cell assembly (second battery cell assembly). Also, a coupling groove 2323 in which a coupling protrusion 2322 of a second support member of another battery cell assembly (second battery cell assembly) is accommodated may be disposed in a second support member of one battery cell assembly (first battery cell assembly).

When the coupling grooves 2323 of the pair of support members 2300 are disposed in opposite directions, the positive electrode and the negative electrode of the battery cell assembly 2000 may be stacked such that the positions thereof may be switched to each other. However, the direction in which the coupling protrusion 2322 protrudes from the pair of support members 2300 is not limited to the above example. For example, the entirety of coupling protrusions 2322 of the pair of support members 2300 may protrude in the same direction.

In example embodiments, one support member 2300 may include a plurality of coupling guide members. For example, as illustrated in FIG. 6, the pair of flange portions 2320 disposed on both ends of one support member 2300 may include coupling protrusions 2322 protruding in the same direction, respectively. As the two coupling protrusions 2322 of the support member 2300 protrude in the same direction, the support member 2300 may be prevented from being turned upside down and fastened to another support member 2300 in the vertical direction (e.g., the Y-axis direction of FIG. 6).

In example embodiments, since the battery cell assembly 2000 has the coupling protrusion 2322 and the coupling groove 2323 having a shape corresponding thereto, a plurality of battery cell assemblies 2000 may be stacked and assembled in an accurate position, and erroneous assembly may be prevented in advance.

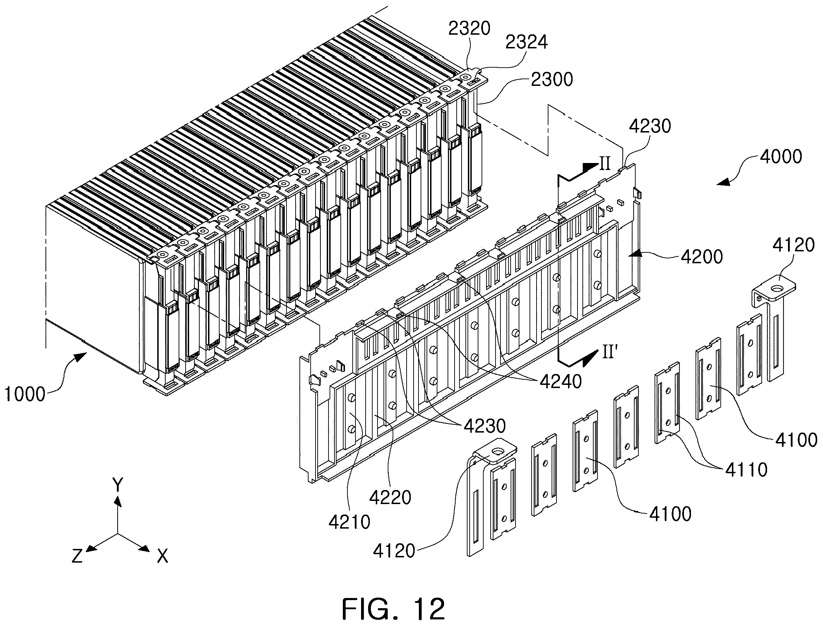

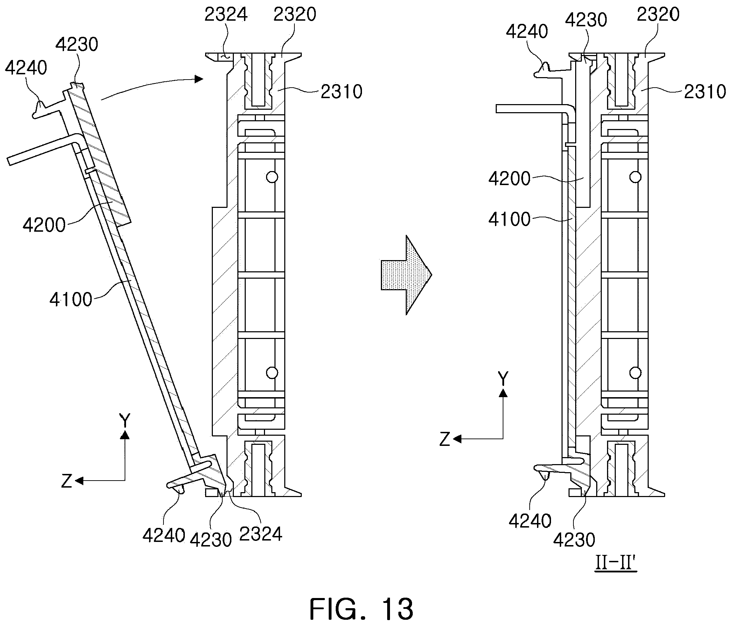

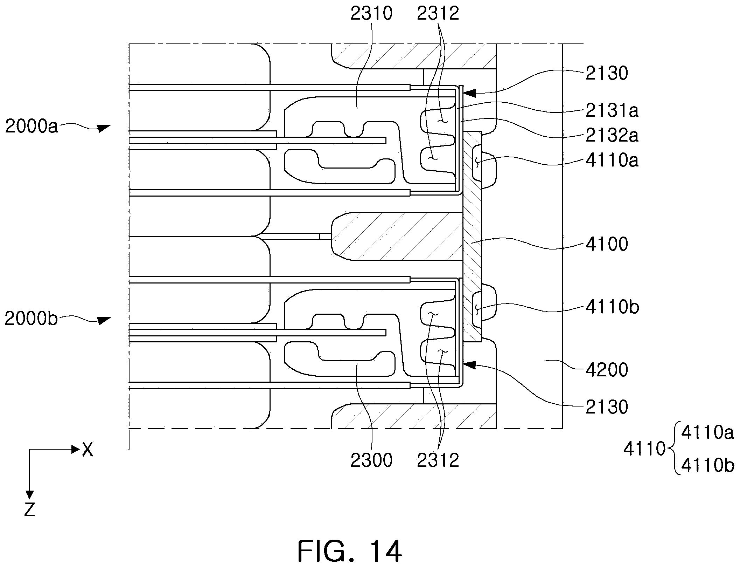

In example embodiments, individual battery cell assemblies 2000 included in the cell stack 1000 may be electrically connected to each other by a busbar assembly 4000. Hereinafter, the busbar assembly 4000 will be described in greater detail with reference to FIGS. 12 to 14. FIG. 12 is an exploded perspective illustrating a busbar assembly 4000 coupled to a cell stack according to an example embodiment, FIG. 13 is a diagram illustrating a state in which a busbar assembly 4000 is coupled to a battery cell assembly 1000 according to an example embodiment, and FIG. 14 is a cross-sectional diagram illustrating a state in which a busbar assembly 4000 is coupled to a cell stack 1000) according to an example embodiment. The battery module 200 and the components thereof (e.g., the battery cell assembly 2000 and the busbar assembly 4000) described with reference to FIGS. 12 to 14 may correspond to the battery module 200 described in FIGS. 1 to 11 and the components thereof, and thus, overlapping descriptions will not be provided.

In example embodiments, the busbar assembly 4000 may include a busbar 4100 electrically connecting one battery cell assembly 2000 to another battery cell assembly 2000 and a busbar frame 4200 supporting the busbar 4100.

The busbar 4100 may be formed of a conductive material and may work to electrically connect the plurality of battery cell assemblies 2000 to each other. As a method of connecting the busbar 4100 to the battery cell assembly 2000, various welding methods including laser welding may be applied. However, the connecting method is not limited to welding, and any connecting method which may electrically conduct two metallic materials may be used.

The busbar frame 4200 may support the busbar 4100 to be stably connected to the battery cell assembly 2000. The busbar 4100 may be electrically connected to the battery cell assembly 2000 while being fixed to the busbar frame 4200. For example, as illustrated in FIG. 12, the busbar frame 4200 may be disposed such that one surface may cover the cell stack 1000, and a plurality of busbars 4100 may be disposed on the other surface of the busbar frame 4200.

The busbar frame 4200 may structurally fix the busbar 4100 against external shock or vibration. For example, the busbar frame 4200 may include a plastic material that is lightweight and has excellent mechanical strength, such as polybutylene terephthalate (PBT) and modified polyphenylene oxide (MPPO), and accordingly, the busbar 4100 may be structurally supported while ensuring insulation.

In example embodiments, a plurality of busbars 4100 may be disposed on the busbar frame 4200 side by side in the stacking direction of the battery cell assembly 2000 (e.g., the Z-axis direction in FIG. 12). For example, as illustrated in FIG. 12, the plurality of busbars 4100 may be disposed side by side with a predetermined distance therebetween in the stacking direction of the battery cell assembly 2000 in the seating portion 4210 formed on the busbar frame 4200.

The busbar frame 4200 may include a partition wall 4220 disposed between one seating portion 4210 and another seating portion 4210 and protruding in a direction perpendicular to the arrangement direction of the busbars 4100 (e.g., the X-axis direction) . The partition wall 4220 may protrude more than the thickness of the busbar 4100 between two neighboring busbars 4100 (here, "thickness" may refer to the length in the X-axis direction in FIG. 12). The partition wall 4220 may be formed of the same material as that of the busbar frame 4200 and may integrally with the busbar frame 4200. Alternatively, the partition wall 4220 may include a material having a higher melting point than that of the busbar frame 4200 and may be provided as a separate member inserted into the busbar frame 4200. The partition wall 4220 may prevent two adjacent busbars 4100 from being short-circuited by being in contact with each other.

The busbar 4100 may be fixed to the busbar frame 4200 in various manners. For example, the busbar 4100 may be fixed to the busbar frame 4200 by a thermal fusion process or an insert injection process.

The lead tab 2130 of the battery cell assembly 2000 may be electrically connected to the busbar 4100. For example, at least a portion of the lead tab 2130 of the battery cell assembly 2000 may be disposed to oppose each other with the busbar 4100, and may be electrically bonded to the busbar 4100 by being bonded to each other by a process such as laser welding.

At least a portion of the plurality of busbars 4100 may have connection terminals 4120 used for electrical connection to an external entity, and the connection terminals 4120 may be exposed to the outside by penetrating through the cover assembly 5000 to be electrically connected to the an external device.

Although not illustrated in the drawings, the battery module 200 according to example embodiments may further include a sensing module (not illustrated) connected to the busbar assembly 4000. The sensing module (not illustrated) may include a temperature sensor or a voltage sensor, and accordingly, the state of the battery cell assembly 2000 may be detected.

In example embodiments, the busbar frame 4200 may be coupled to the support member 2300 of the battery cell assembly 2000 and may be fixed to the cell stack 1000. For example, a first hook-receiving groove 2324 may be disposed in the support member 2300, and a first hook 4230 inserted into the first hooking groove 2324 may be disposed in the busbar frame 4200, the support member 2300 and the busbar frame 4200 may be hook-coupled to each other. Referring to FIGS. 12 and 13, the flange portions 2320 on both ends of the support member 2300 may include first hooking grooves 2324 having the shape of holes penetrating in the third direction (Y-axis direction). Correspondingly, the busbar frame 4200 may include a plurality of first hooks 4230 protruding in the third direction (Y-axis direction). The plurality of first hooks 4230 may be coupled to the first hooking grooves 2324 of at least a portion of the plurality of battery cell assemblies 2000 such that the busbar assembly 4000 may be fixed to the cell stack 1000.

Referring to FIG. 13, the busbar frame 4200 may include a pair of first hooks 4230 aligned in a third direction (Y-axis direction) and protruding in opposite directions. As illustrated in FIG. 13, a pair of first hooks 4230 may be fastened to the first hooking grooves 2324 of the battery cell assembly 2000 in sequence, thereby assembling a busbar assembly 4000 into a cell stack 1000.

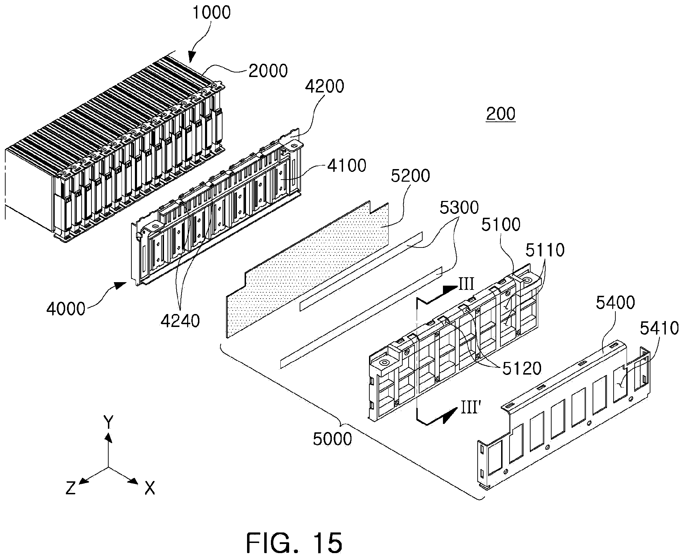

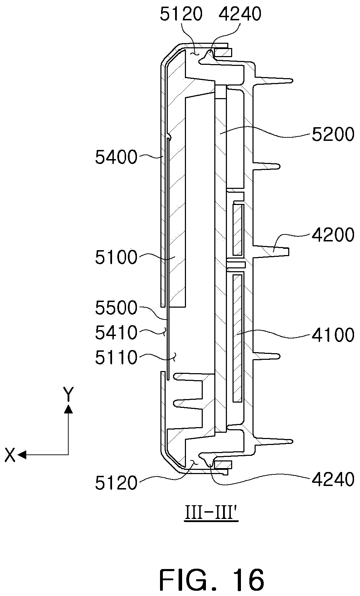

The busbar frame 4200 may further include a second hook 4240 used to fasten to the cover assembly 5000, which will be described later with reference to FIGS. 15 and 16.

Referring to FIG. 14, the lead tab 2130 of the battery cell assembly 2000 may be electrically connected to the busbar 4100. For example, the first connection portion 2131a and the second connection portion 2132a of one battery cell assembly 2000 may be electrically connected to the busbar 4100 by welding. In this case, the first connection portion 2131a and the second connection portion 2132a may overlap and may be in contact each other in a direction from the support member 2300 toward the busbar 4100, and may be disposed between the support member 2300 and the busbar 4100.

In example embodiments, the busbar 4100 may be welded to lead tabs 2130 of two neighboring battery cell assemblies 2000, respectively. For example, as illustrated in FIG. 14, one portion of the busbar 4100 may be welded to the first battery cell assembly 2000a, and the other portion may be welded to the second battery cell assembly 2000b. Accordingly, the first battery cell assembly 2000a and the second battery cell assembly 2000b may be electrically connected to each other through the busbar 4100.

The first welding process and the second welding process previously described with reference to FIG. 9 may be applied to welding between the battery cell assembly 2000 and the busbar 4100. That is, the first connection portion 2131a and the second connection portion 2132a may be welded to each other along the first welding region W1 in the first welding process, and in the second welding process, the first connection part 2131a, the second connection part 2132a, and the busbar (4100 in FIG. 14) may be welded to each other along the second welding region W2.

To stably weld the busbar 4100 and the battery cell assembly 2000 to each other, the busbar 4100 may include one or more guide grooves 4110. For example, as illustrated in FIGS. 12 and 14, one or more guide grooves 4110 recessed toward the battery cell assembly 2000 may be formed on the surface of the busbar 4100. In the guide groove 4110, a recess recessed in the second direction (X-axis direction) of the busbar 4100 may extend in a third direction (Y-axis direction) perpendicular to the second direction (X-axis direction) . A welding line for welding the connecting portions 2131a and 2132a of the two lead tabs 2131 and 2132 and the busbar 4100 may be determined along the guide groove 4110.

The busbar 4100 may include a plurality of guide grooves 4110. Each guide groove 4110 may be disposed to oppose the support member 2300 of the different battery cell assembly 2000. For example, as illustrated in FIG. 14, the third guide groove 4110a may be disposed to oppose the support member 2300 of the first battery cell assembly 2000a in the second direction (X-axis direction), and the fourth guide groove 4110b may be disposed to oppose the support member 2300 of the second battery cell assembly 2000b in the second direction (X-axis direction) .

The guide groove 4110 of the busbar 4100 maybe disposed to oppose the guide groove 2312 of the battery cell assembly 2000. For example, the third guide groove 4110a of the busbar 4100 may be disposed to oppose at least one of the guide grooves 2312 of the first battery cell assembly 2000a in the second direction (X-axis direction) . The fourth guide groove 4110b may be disposed to oppose at least one of the guide grooves 2312 of the second battery cell assembly 2000b in the second direction (X-axis direction) . Referring to FIG. 14, the guide groove 4110 of the busbar 4100 may oppose a guide groove disposed more adjacent toward the other battery cell assembly (for example, 2000a) among the two guide grooves 2312 of each of the two battery cell assemblies (2000a, 2000b) adjacent to each other.

As the guide groove 4110 of the busbar 4100 and the guide groove 2312 of the battery cell assembly 2000 are arranged side by side, welding between the busbar 4100 and the lead tab 2130 is safely performed.

In example embodiments, the battery module 200 may include a cover assembly 5000 covering the busbar frame 4200. Hereinafter, the cover assembly 5000 will be described in greater detail with reference to FIGS. 15 and 16. FIG. 15 is an exploded perspective a cover assembly 5000 according to an example embodiment, and FIG. 16 is a cross-sectional diagram illustrating a state in which the cover assembly 5000 is coupled to the busbar assembly 4000 according to the portion taken along line III-III in FIG. 15 according to an example embodiment. The battery module 200 and the components thereof (e.g., the battery cell assembly 2000, the busbar assembly 4000, and the cover assembly 5000, etc.) described with reference to FIGS. 15 to 16 may be similar to the components described with reference to FIGS. 1 to 14, overlapping descriptions will not be provided.

In example embodiments, the cover assembly 5000 may include a cover frame 5100 and an insulating member 2210 fixed to the cover frame 5100.

The cover frame 5100 may be coupled to the busbar assembly 4000 and may physically and electrically protect the busbar 4100 from the external environment of the battery module 200. For example, the cover frame 5100 may cover the busbar 4100 and may prevent the busbar 4100 from being unintentionally conducted with an object outside the battery module 200.

The cover frame 5100 may include a plastic material which have a light weight and excellent mechanical strength, such as polybutylene terephthalate (PBT) and modified polyphenylene oxide (MPPO). Accordingly, the busbar assembly 4000 may be protected from external impact while securing insulation.

The cover assembly 5000 may include a side cover 5400 coupled to the outside of the cover frame 5100. The side cover 5400 may be disposed on the outermost portions of both sides of the battery module 200 and may protect the battery module 200 from external impact.

For example, the side cover 5400 may include a material having higher mechanical strength than that of the cover frame 5100.

For example, the side cover 5400 may include a metal material (e.g., stainless steel).

The cover frame 5100 and the side cover 5400 may be hook-coupled to each other.

Each of the cover frame 5100 and the side cover 5400 may include one or more venting holes 5110 and 5410 . For example, the cover frame 5100 may include a plurality of first venting holes 5110 penetrating in a direction opposing the busbar 4100 (X-axis direction). The side cover 5400 may include a second venting hole 5410 opposing the first venting hole 5110. Gas generated by the cell stack 1000 may be discharged to the outside of the battery module 200 through the first venting hole 5110 of the cover frame 5100 and the second venting hole 5410 of the side cover 5400.

A heat insulating member 5200 may be disposed between the cover frame 5100 and the busbar assembly 4000. In the description below, the heat insulating member 5200 of the cover assembly 5000 may be referred to as a second heat insulating member 5200 to differentiate from the heat insulating member 2210 of the battery cell assembly 2000.

The second insulating member 5200 may prevent or block flame or high-temperature thermal energy from spreading to another adjacent battery module 200 when an event occurs in the battery module 200. Also, the second insulating member 5200 may reduce thermal energy of high-temperature gas or dust ejected from the battery module 200. Also, as the second heat insulating member 5200 is disposed, gas, flame, or dust generated due to thermal runaway of another adjacent battery module 200 may be prevented from entering the battery module 200. To this end, the second heat insulating member 5200 may include a material having at least one of flame retardancy, heat resistance, heat insulation, and insulation. For example, the second insulating member 5200 may include ceramic wool for preventing spread of heat and/or flame. However, the material of the second heat insulating member 5200 is not limited thereto, and may be formed of any material which may prevent heat or flame from spreading to other adjacent battery modules 200 or the battery cells 2100.

The second heat insulating member 5200 may be fixed to the cover frame 5100. For example, as illustrated in FIG. 15, an adhesive member 5300 may be disposed between the second heat insulating member 5200 and the cover frame 5100, and the second heat insulating member 5200 may be adhesively fixed to the cover frame 5100 by the adhesive member 5300. For example, the adhesive member 5300 may be a double-sided tape or a binder. However, an example embodiment thereof is not limited thereto, and instead of the adhesive member 5300, a fastening member (not illustrated) fastening the second heat insulating member 5200 and the cover frame 5100 to each other may be disposed.

In example embodiments, the second heat insulating member 5200 may be configured to cover the first venting hole 5110 and the second venting hole 5410. The second heat insulating member 5200 may prevent foreign substances outside the battery module 200 or gases and particles emitted from other battery modules 200 from entering the battery module 200 through the venting holes 5110 and 5410.

In a thermal runaway situation inside the battery module 200, at least a portion of the second insulating member 5200 may be torn to allow gas generated by the cell stack 1000 to pass therethrough. Alternatively, the second heat insulating member 5200 may include a material for passing gas, and may be configured to allow gas generated by the cell stack 1000 to pass through without damaging the member.

In example embodiments, the cover assembly 5000 may be coupled to the busbar assembly 4000 and may be fixed to the cell stack 1000. For example, a second hook-receiving groove 5120 may be disposed in the cover frame 5100, and a second hook 4240 inserted into the second hooking groove 5120 may be disposed in the busbar frame 4200, such that the cover frame 5100 and the busbar frame 4200 maybe hook-coupled to each other. Referring to FIG. 15, the cover frame 5100 may include a second hooking groove 5120 having a shape of a hole penetrating in a third direction (Y-axis direction). Correspondingly, the busbar frame 4200 may include a plurality of second hooks 4240 protruding in the third direction (Y-axis direction). The plurality of second hooks 4240 may be coupled to at least a portion of the second hooking grooves 5120 such that the cover assembly 5000 may be fixed to the busbar assembly 4000.

Referring to the cross-sectional diagram in FIG. 16, the busbar frame 4200 may include a pair of second hooks 4240 aligned in a third direction (Y-axis direction) and protruding in opposite directions. Accordingly, by fastening the pair of second hooks 4240 to the second locking grooves 5120 of the cover assembly 5000 in order, the cover assembly 5000 may be simply assembled to the busbar assembly 4000.

In example embodiments, the cover assembly 5000 may further include a shielding member 5500 disposed between the cover frame 5100 and the side cover 5400 and blocking the venting hole. As illustrated in FIG. 16, the shielding member 5500 may be provided as a thin film or sheet, and may work to primarily block gas or particles entering from the outside of the battery module 200. The shielding member 5500 may include a material having a light weight and excellent impact resistance, heat resistance, or electrical insulation, and may include, for example, a polycarbonate sheet. The shielding member 5500 together with the second insulating member disposed between the cover frame 5100 and the busbar frame may block high-temperature heat generated by the battery module 200 from spreading to other adjacent battery modules.

In a thermal runaway situation of the battery module 200, at least a portion of the shielding member 5500 may be torn such that gas ejected from the inside of the battery module 200 toward the venting hole may properly pass therethrough.

However, the coupling structure in FIG. 16 is merely an example, and the cover assembly 5000 may be coupled to the other structures (e.g., battery cell assembly) of the battery module 200 and may cover the busbar assembly 4000.

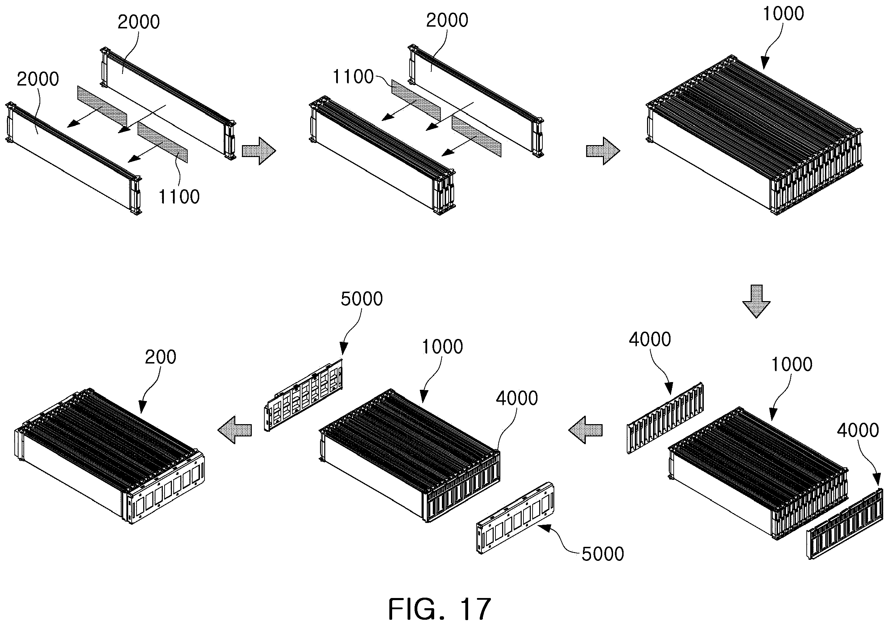

Hereinafter, referring to FIG. 17, an assembly sequence of the battery module 200 according to example embodiments will be described. FIG. 17 is an example sequence of assembling a battery module. The battery module 200 described with reference to FIG. 17 and the components thereof (e.g., the battery cell assembly 2000, the busbar assembly 4000, and the cover assembly 5000, etc.) correspond to the battery module 200 and the components thereof described with reference to FIGS. 1 to 16 and thus, overlapping descriptions will not be provided.

As illustrated on the upper left side in the FIG. 17, the assembly unit of the battery module 200 may be the battery cell assembly 2000. An appropriate number of battery cell assemblies 2000 suitable for the voltage output value required for the battery module 200 may be prepared.

As illustrated on the upper central side in FIG. 17, a plurality of battery cell assemblies 2000 may be stacked and assembled. In this case, the battery cell assemblies 2000 may be fixed to each other by disposing the adhesive member 1100 between the battery cell assemblies 2000. Also, using the coupling protrusion (e.g., 2322 in FIG. 6) and the coupling groove (e.g., 2323 in FIG. 6) of the battery cell assembly 2000, stacking and assembling may be performed quickly and accurately.

As illustrated in the upper right corner in FIG. 17, a cell stack 1000 may be formed by stacking all battery cell assemblies 2000. In the cell stack 1000, lead tabs (e.g., 2130 in FIG. 4) may be exposed in a direction perpendicular to the stacking direction, and the lead tabs and the busbar assembly 4000 may be electrically connected to each other.

As illustrated in the lower right in FIG. 17, the battery cell assembly 2000 and the busbar assembly 4000 may be coupled to each other and may electrically connect the battery cell assemblies 2000 to each other.

As illustrated in the lower central side in FIG. 17, the cover assembly 5000 and the busbar assembly 4000 may be coupled to each other. The cover assembly 5000 may cover the busbar assembly 4000 and may protect the busbar assembly 4000.

After completing the coupling of the cover assembly 5000, one battery module 200 may be completed as illustrated in the lower left in FIG. 17.

In the battery module 200 according to the example embodiments, the number of battery cell assemblies 2000 may be determined according to design requirements, and only the sizes of the busbar assembly 4000 and the cover assembly 5000 may be changed accordingly, such that battery modules of various sizes may be manufactured.

In the battery module 200 according to the example embodiments, members such as a housing or a case covering the outer periphery of the cell stack 1000 may not be provided, and the battery cells 2100 of the cell stack 1000 may be directly exposed to the outside of the battery module 200. Accordingly, heat dissipation efficiency of the battery module 200 may be greatly increased. Also, as the housing or case is not provided, the weight of the battery module 200 may be reduced, and energy density may be further increased while maintaining the same volume.

Meanwhile, since each of the battery cell assembly 2000, the busbar assembly 4000, and the cover assembly 5000 included in the battery module 200 may have a simplified assembly structure, separate fastening portions may be significantly reduced, assembly efficiency and production speed may increase. Also, by adjusting the number of battery cell assemblies 2000, which are assembly units of the battery module 200, the battery module 200 meeting various requirements may be swiftly provided.

According to the aforementioned example embodiment, an insulating member may be disposed between the pair of battery cells and spread of heat between the battery cells may be prevented or blocked.

Also, the battery module may have a simplified structure with high assembly efficiency. Also, by stacking a plurality of battery cell assemblies with improved assemblability, battery modules of various sizes may be swiftly manufactured.

Also, the battery module may, by reducing the heat transfer path of the battery cell, increase heat dissipation efficiency.

While the example embodiments have been illustrated and described above, it will be apparent to those skilled in the art that modifications and variations could be made without departing from the scope of the present disclosure as defined by the appended claims.

## Claims

1. A battery module, comprising:
a cell stack in which a plurality of battery cell assemblies are stacked;
a busbar assembly electrically connected to the cell stack; and
a cover assembly covering the busbar assembly,
wherein at least one of the plurality of battery cell assemblies includes:
at least two battery cells opposing each other; and
a support member supporting the at least two battery cells, and
wherein the busbar assembly is coupled to the support member.

2. The battery module of claim 1,
wherein at least one of the plurality of battery cell assemblies includes a first insulating member disposed between the at least two battery cells, and
wherein the first heat insulating member is configured to prevent heat propagation between the at least two battery cells.

3. The battery module of claim 1 or 2,
wherein the plurality of battery cell assemblies include a first battery cell assembly and a second battery cell assembly adjacent to each other,
wherein the support member of the first battery cell assembly includes a coupling protrusion, and
wherein the support member of the second battery cell assembly includes a coupling groove in which the coupling protrusion is accommodated.

4. The battery module of claim 3, further comprising:
a first adhesive member having one surface to which the first battery cell assembly is attached and the other surface opposing the one surface to which the second battery cell assembly is attached.

5. The battery module of anyone of the preceding claims, wherein the busbar assembly includes:
a busbar electrically connected to at least one of the plurality of battery cell assemblies; and
a busbar frame supporting the busbar.

6. The battery module of claim 5, wherein one of the busbar frame and the support member includes a first hook, and the other includes a first hooking groove into which the first hook is inserted.

7. The battery module of anyone of the preceding claims,
wherein the at least two battery cells include a first battery cell and a second battery cell opposing each other in a first direction,
wherein the first battery cell includes a first lead tab of which at least a portion is bent, and
wherein the second battery cell includes a second lead tab in contact with the first lead tab.

8. The battery module of claim 7,
wherein the first lead tab includes a first connection portion in contact with the second lead tab,
wherein the second lead tab includes a second connection portion in contact with the first connection portion, and
wherein the first connection portion and the second connection portion overlap each other in a direction from the support member toward the busbar assembly,
preferably wherein the first connection portion and the second connection portion are disposed between the support member and the busbar assembly.

9. The battery module of claim 8,
wherein the support member includes a plurality of guide grooves opposing the first connecting portion and the second connecting portion, and
wherein the first connection portion and the second connection portion are welded to each other in a first welding region formed along at least one of the plurality of guide grooves.

10. The battery module of claim 9,
wherein the busbar assembly includes a busbar electrically connected to the first battery cell and the second battery cell, and
wherein the busbar is welded to the first connection portion and the second connection portion in a second welding region,
preferably wherein the plurality of guide grooves include a first guide groove and a second guide groove extending parallel to each other,
wherein the first welding region is formed along the first guide groove, and
wherein the second welding region is formed along the second guide groove.

11. The battery module of anyone of the preceding claims, wherein the cover assembly includes:
a cover frame coupled to at least one of the busbar assembly and the support member; and
a second heat insulating member disposed between the cover frame and the busbar assembly.

12. The battery module of claim 11, wherein one of the busbar assembly and the cover frame includes a second hook, and the other includes a second hooking groove into which the second hook is inserted.

13. The battery module of claim 12, wherein
the cover assembly further includes a second adhesive member for fixing the second heat insulating member to the cover frame, preferably wherein the second heat insulating member includes ceramic wool.

14. The battery module of anyone of the preceding claims, wherein the at least two battery cells oppose each other in a first direction,
wherein at least one of the at least two battery cells include a cell body portion in which an electrode assembly is accommodated; and a plurality of lead tabs disposed on both ends of the cell body in a second direction perpendicular to the first direction.

15. The battery module of claim 14,
wherein the busbar assembly opposes the cell stack in the second direction and is electrically connected to at least one of the plurality of lead tabs,
preferably wherein the busbar assembly is disposed on both ends of the cell stack in the second direction.
